# EUROPÄISCHE PATENTSCHRIFT

(11) **EP 1 369 971 B1**
(45) Veröffentlichungstag und Bekanntmachung des Hinweises auf die Patenterteilung: **20.10.2004**
(21) Anmeldenummer: 02405457.9
(22) Anmeldetag: 06.06.2002
(51) Int. Cl.: H02G 1/12

(54) **Vorrichtung und Verfahren zum Bearbeiten von Kabeln**
Device and method for processing cables
Dispositif et procédé pour l'usinage de câbles

(43) Veröffentlichungstag der Anmeldung: 10.12.2003
(73) Patentinhaber: KOMAX HOLDING AG, 6036 Dierikon (CH)
(72) Erfinder: Mehri, Urs, 6370 Stans (CH); Lustenberger, Alois, 6014 Littau (CH)
(74) Vertreter: EGLI-EUROPEAN PATENT ATTORNEYS

(56) Entgegenhaltungen:
- EP-A- 1 174 970
- WO-A-95/13641
- WO-A-97/17751
- US-A- 4 554 725
- US-A- 5 445 051

## Beschreibung

Die vorliegende Erfindung betrifft eine Vorrichtung zum Bearbeiten von kabelförmigen Leitern, z.B. eine Vorrichtung zum Abisolieren und/oder Abziehen von Ummantelungsmaterialien von mehradrigen kabelförmigen Leitern. Weiterhin betrifft die Erfindung ein Verfahren zum Abisolieren und/oder Abziehen von Ummantelungsmaterialien von mehradrigen, kabelförmigen Leitern, wobei das Abziehen des Ummantelüngsmaterials so geschehen kann, dass zum Schutz des verbleibenden Leiterendes das abgetrennte Isoliermaterial auf dem Kabel verbleibt.

Der Vorgang und für diesen Vorgang konfigurierte Vorrichtungen zum Abtrennen von kabelförmigen Leiterstücken und zum Abisolieren eines oder beider Kabelenden sind hinlänglich bekannt. Dabei wird üblicherweise bei einem mehradrigen Kabel, bei dem jede Kabelader einzeln ummantelt (isoliert) ist und zudem eine gemeinsame Ummantelung die äussere Hülle des Kabels ausbildet, zunächst einmal diese äussere Ummantelung auf einen vorbestimmten Teil mit Hilfe eines ersten Abmantelungsmessers entfernt und dann werden für die Einzelleiter (Adern) des mehradrigen Kabels deren Ummantelungen mit Hilfe eines Mehrfachmessers eingeschnitten und entweder entfernt oder aber nur um ein Stück abgezogen, um den Kabel- oder Litzenenden einen Schutz, z.B. gegenüber Aufdrillen, zu gewähren. Sodann wird das Kabelende um den Betrag vorgeschoben, der der gewünschten Länge des herzustellenden Kabelstückes entspricht, das Kabel wird an dieser Stelle - z.B. mit dem ersten Abmantelungsmesser - abgeschnitten und der beschriebene Vorgang wird am rückwärtigen Ende des Kabels wiederholt. Allenfalls werden danach die Leiterenden z.B. dadurch weiterverarbeitet, dass ihnen ein Crimpteil oder ein anderes Element (z.B. ein Sensor etc.) aufgesetzt wird oder dass sie verdrillt werden, wie z.B. aus der WO-A-99/52188 bekannt. Bei der Abisolierung tritt das - bereits bekannte und auch grundsätzlich schon gelöste Problem - auf, dass zum Abisolieren der Ummantelung, nämlich sowohl der äusseren Ummantelung wie auch der Einzelleiterummantelungen, das rückseitig zu bearbeitende Kabelende zumindest um die Länge zurückgeschoben werden muss, die der bzw. den Abisolierlängen entspricht. Dieses zurückgeschobene Ende steht dann in Kollision mit dem soeben abgeschnittenen Ende des zugeführten Kabels. Für dieses Problem ist die Lösung bekannt, das zugeführte Kabelende zwischen dem letzten Transportelement vor dem Bearbeitungspunkt und dem Bearbeitungspunkt in einer Führungshülse oder einem anderen Führungselement geführt zu halten und bei der Bearbeitung des rückwärtigen Kabelendes diese Führungshülse aus der Kabellaufrichtung herauszuschwenken. Ein solches typisches Transportelement ist übrigens aus der EP-A-0 864 524 bekannt und dort bestens beschrieben. Eine andere Lösung ist z.B. aus der EP-A-0 234 929 bekannt. Alternativ wurde auch schon vorgeschlagen - um die Abstände zwischen dem letzten Transportelement vor dem Bearbeitungspunkt und dem Bearbeitungspunkt klein halten zu können - eine Führungshülse linear aus der Kabellaufrichtung herauszubewegen (WO-A-97/17751), wodurch die Abstände zwar kleiner gehalten werden können, dafür aber eine Rückführbewegung des abgeschnittenen vorderen Endes des Kabel im vollem Umfang der Länge des Führungselementes in Kauf genommen werden muss, was die Genauigkeit des Verfahrens in erheblichem Umfang zu beeinträchtigen vermag.

Eine typische Anordnung zur Durchführung des beschriebenen Vorganges ist in der WO-A-99/52188 beschrieben, bei der die Führungshülsen nach oben geschwenkt werden. Die Messer, nämlich das Abmantelungsmesser für die äussere Kabelummantelung wie auch das Mehrfachmesser für die Einzelleiter befinden sich dabei in einer Linie, nämlich der Kabelführungsrichtung, wobei bei dem Mehrfachmesser das mittlere Einzelmesser in dieser Richtung angeordnet ist, die weiteren Messer des Mehrfachmessers dagegen links und rechts daneben. Dieses Dokument der Anmelderin stellt den technisch am weitesten fortgeschrittenen Stand der Technik dar.

Diese Einrichtung gilt es im Rahmen der vorliegenden Erfindung weiterzuentwickeln, wobei die folgenden Verbesserungswünsche erfüllt werden sollen. Einerseits führt die Anordnung der Bearbeitungselemente (z.B. der Messer) auf einer Linie in Richtung der Kabelführung zwar dazu, dass alleine durch ein Bewegen der Kabelabschnitte auf dieser Linie die Bearbeitung durchgeführt werden kann, sieht man einmal von dem Herausschwenken des abgeschnittenen Kabelendes ab. Andererseits ist aber durch die vorliegende Anordnung die Bearbeitung beschränkt. Für jeden zusätzlichen Bearbeitungsschritt, wie z.B. das Aufsetzen eines Crimpteils oder eines anderes Elementes (z.B. eines Sensors etc.) für ein Verdrillen des Kabelendes müssen die zusätzlichen Bearbeitungselemente mit einem gewissen Aufwand in die Bearbeitungsstrecke eingepasst werden. Ein modularer Aufbau mit dem möglichen Austausch von zusätzlichen Bearbeitungselementen ist so nur schwer möglich. Andererseits ist es - schon bei der Vorrichtung nach der WO-A-99/52188 besonders vorteilhaft, wenn die Antriebseinrichtungen für den Kabeltransport auf einer Seite der Einrichtung angeordnet sind, nämlich hinten in Bezug auf eine vertikale Ebene durch die Kabelführungsrichtung, während vorne die Vorrichtung leicht zugänglich gehalten wird. Diese Anforderung kann z.B. durch eine vertikale Abschlussplatte realisiert werden.

Aus der EP-A-1 174 970 ist eine Vorrichtung bekannt, bei der die Führungshülsen samt der Transporteinrichtung auf einer Platte montiert sind und diese Platte in ihrer Ebene zusammen mit den Führungshülsen herausschwenkbar ausgebildet ist. In der EP-A-1 174 970 wird dabei vorgeschlagen, eine vordere und eine hintere Platte in Bezug auf die Plattenebene drehbar auszubilden. Dadurch wird zwar das Problem gelöst, die abgeschnittenen Kabelenden herausdrehen oder - schwenken zu können, dies wird aber auf Kosten einer bequemen Zugänglichkeit gemacht.

EP-A-1 174 970 offenbart eine Vorrichtung zum Bearbeiten von kabelförmigen Leitern mit einem Transportmittel mit einem Antriebsmittel zur Transportzuführung und zum Längstransport von kabelförmigen Leitermaterial, einem Trennmittel zum Durchtrennen kabelförmigen Leitermaterials, einem ersten Mittel zum Bearbeiten des durchtrennten, kabelförmigen Leitermaterials, einem Führungsmittel zur Längsführung des kabelförmigen Leitermaterials, einer im wesentlichen senkrecht zur Kabelrichtung ausgebildeten Platte, auf der einzelne der Mittel der Vorrichtung auf einer Seite angeordnet sind, wobei die Platte einen ersten schwenkbaren Plattenteil aufweist, der um eine (zur Plattenebene im wesentlichen senkrechten) Achse zwischen zwei Endlagen mit einem ersten Schwenkwinkel schwenkbar angeordnet ist, wobei sich auf dem Plattenteil das Transportmittel sowie das Führungsmittel befinden und ein zweites Mittel zum Bearbeiten des kabelförmigen Leitermaterials vorgesehen ist, das in einem herausgeschwenkten Zustand des ersten schwenkbaren Plattenteils angeordnet ist.

Die Weiterentwicklung einer gattungsgemässen Vorrichtung entsprechend der vorstehend genannten Wunschvorstellungen ergibt damit die Aufgabe der Erfindung.

Es ist also die Aufgabe der vorliegenden Erfindung, eine Vorrichtung vorzuschlagen, bei dem die Kabelenden in weiteren Bearbeitungsstationen bearbeitet werden können, indem ihre Adern abisoliert werden oder z.B. ein Crimpteil oder ein anderes Element (z.B. ein Sensor etc.) aufgesetzt wird und/oder sie verdrillt werden. Gemäss der Aufgabe der Erfindung müssen dabei die Kabelenden geführt werden und es soll möglich sein, modular verschiedene Bearbeitungseinrichtungen einsetzen und möglichst leicht austauschen zu können. Alle diese Forderungen sollen dabei nicht auf Kosten der Zugänglichkeit gehen.

Die Erfindung löst die Aufgabe durch eine Vorrichtung nach Anspruch 1. Dabei haben die Massnahmen der Erfindung zunächst einmal zur Folge, dass einerseits eine gute Zugänglichkeit zu den kabelführenden Elementen erhalten bleibt, aber andererseits eine sehr flexible Anordnung für das Hinzufügen und das Weglassen von Bearbeitungselementen angebo-ten wird. Vorteilhaft ist es auch, die Massnahmen der Erfindung mit der Verwendung einer z.B. magnetisch nach oben schwenkbaren Führungshülse, also einem Führungsrohr, zu verbinden, da dann Schwenkungsbewegungen des vorderen Kabelendes in zwei verschiedene, orthogonal zueinander und zu der Kabelrichtung stehenden Richtungen ermöglicht werden. Diese Lösung wird als eigener erfindungsmässiger Beitrag angesehen.

Im Falle des Schwenkens der Plattenteile aus einer Grundstellung, bei der diese Plattenteile im wesentlichen mit einer Grundplatte - oder wenn auf diese Grundplatte verzichtet wird, miteinander - eine Ebene bilden, jeweils in eine ausgeschwenkte Stellung, wird vorteilhafterweise ein pneumatischer Schwenkantrieb verwendet. Wenn aber die Plattenteile aus der Grundstellung jeweils in z.B. zwei unterschiedliche Stellungen geschwenkt werden sollen, so ist ein elektrischer Schwenkantrieb mit einem Schrittmotor vorteilhaft.

Besonders vorteilhaft ist ein Verfahren nach Anspruch 7, bei dem - entsprechend dem Vorrichtungsanspruch 1 - ein Verfahren zum Konfigurieren von Kabeln vorgeschlagen wird.

Weitere vorteilhafte Einzelheiten der Erfindung sind in den abhängigen Ansprüchen dargelegt.

Die vorgenannten sowie die beanspruchten und in den nachfolgenden Ausführungsbeispielen beschriebenen, erfindungsgemäss zu verwendenden Elemente unterliegen in ihrer Grösse, Formgestaltung, Materialverwendung und technischen Konzeption keinen besonderen Ausnahmebedingungen, so dass die in dem jeweiligen Anwendungsgebiet bekannten Auswahlkriterien uneingeschränkt Anwendung finden können.

Weiterhin ist die Vorrichtung nicht auf elektrische kabelförmige Leiter beschränkt. Sowohl die Vorrichtung als auch das Verfahren lassen sich für andere kabelförmige Leiter, wie z.B. Lichtleiter etc. verwenden.

Weitere Einzelheiten, Merkmale und Vorteile des Gegenstandes der Erfindung ergeben sich aus der nachfolgenden Beschreibung der dazugehörigen Zeichnungen, in denen - beispielhaft - eine Vorrichtung und ein dazugehöriger Verfahrensablauf zur vorliegenden Erfindung erläutert wird.

In den Zeichnungen zeigen:
- Fig. 1: eine perspektivische Darstellung der Vorrichtung gemäss der vorliegenden Erfindung, bei der beide Schwenkteile in die Position der weiteren Bearbeitungseinheiten ausgeschwenkt sind;
- Fig. 2: eine Draufsicht auf die Vorrichtung gemäss Figur 1, in dieser Zeichnung ist das Kabel mit eingezeichnet;

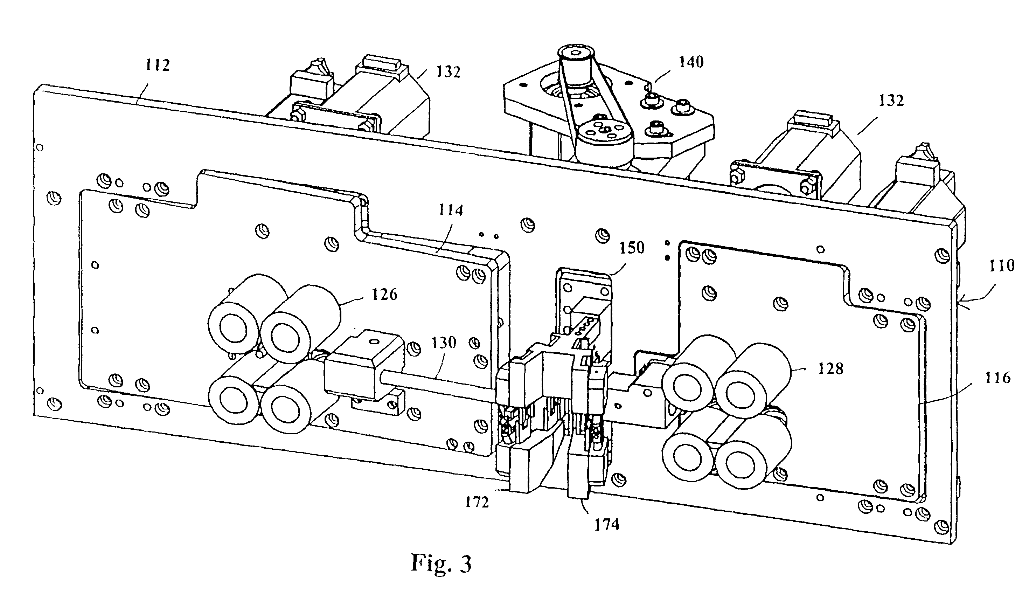

- Fig. 3: eine perspektivische Darstellung der Vorrichtung gemäss Figur 1, bei der der vordere Schwenkteil in die Position der weiteren Bearbeitungseinheit ausgeschwenkt ist, während der hintere Schwenkteil in die Position der ersten Bearbeitungseinheit eingeschwenkt ist;

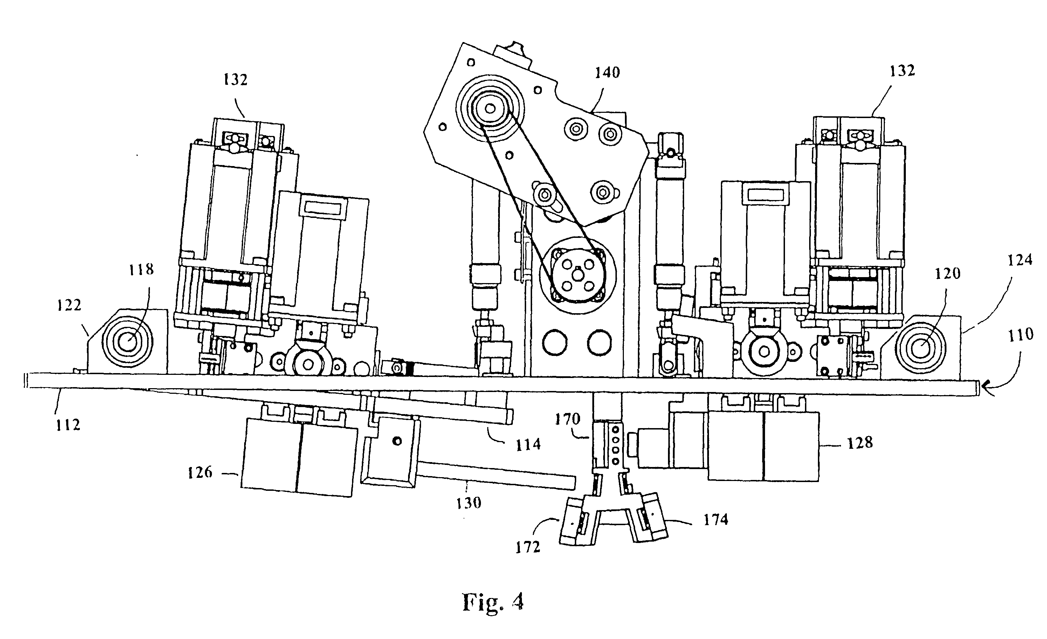

- Fig. 4: eine Draufsicht auf die Vorrichtung gemäss Figur 3;

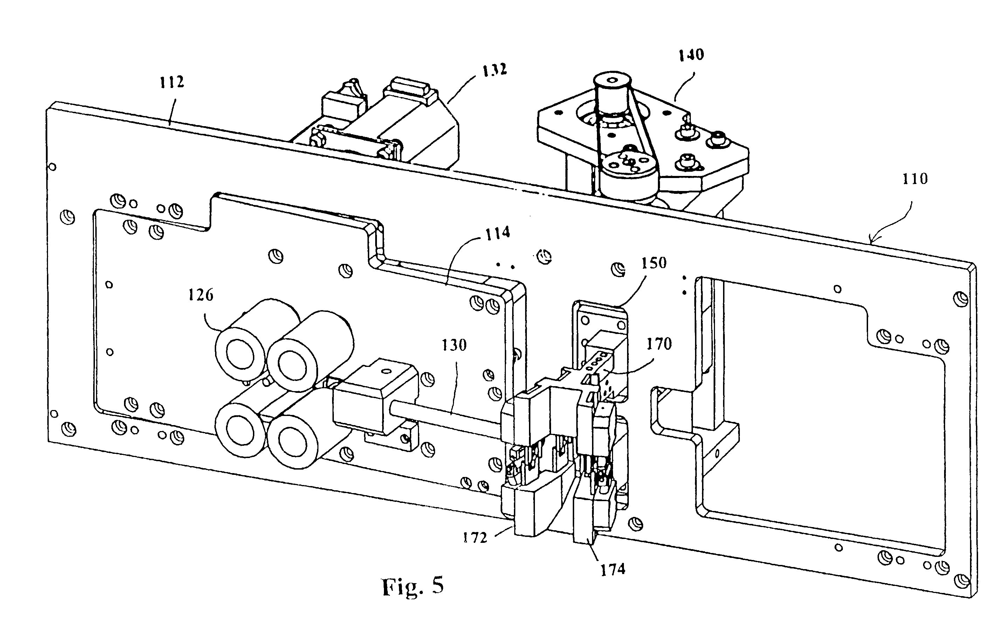

- Fig. 5: eine Darstellung gemäss Figur 3, bei der der hintere Schwenkteil entfernt wurde;

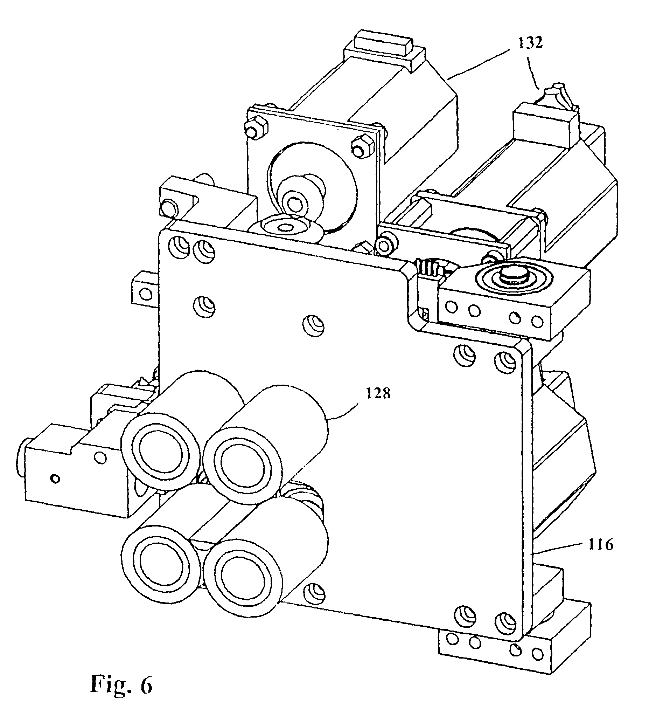

- Fig. 6: eine perspektivische Darstellung des hinteren Schwenkteils;

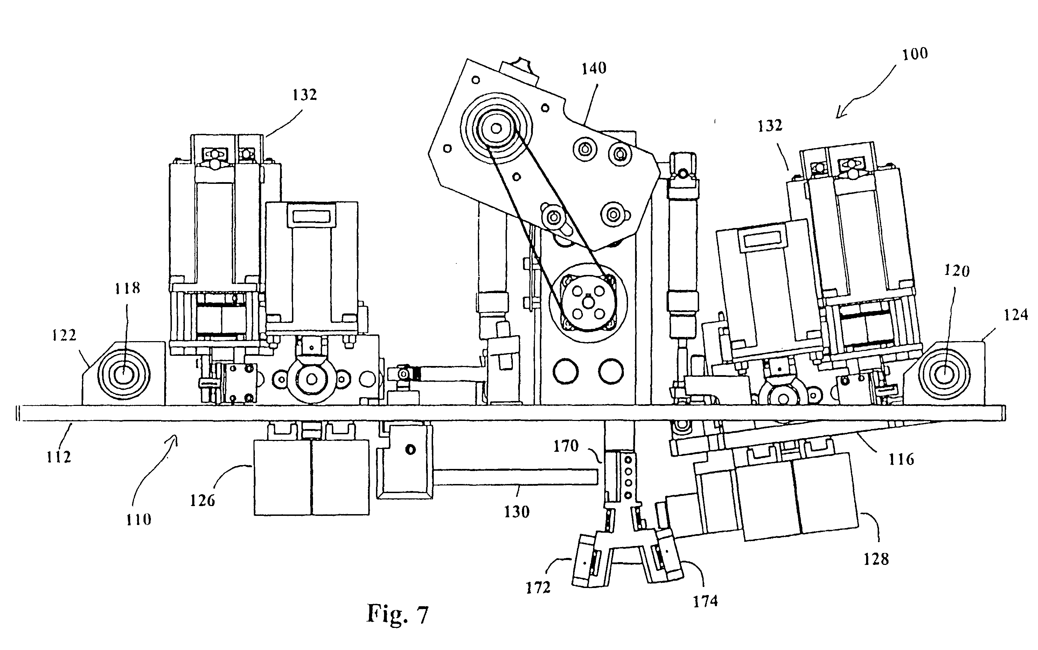

- Fig. 7: eine Draufsicht auf die Vorrichtung gemäss Figur 1, bei der der hintere Schwenkteil in die Position der weiteren Bearbeitungseinheit ausgeschwenkt ist, während der vordere Schwenkteil in die Position der ersten Bearbeitungseinheit eingeschwenkt ist;

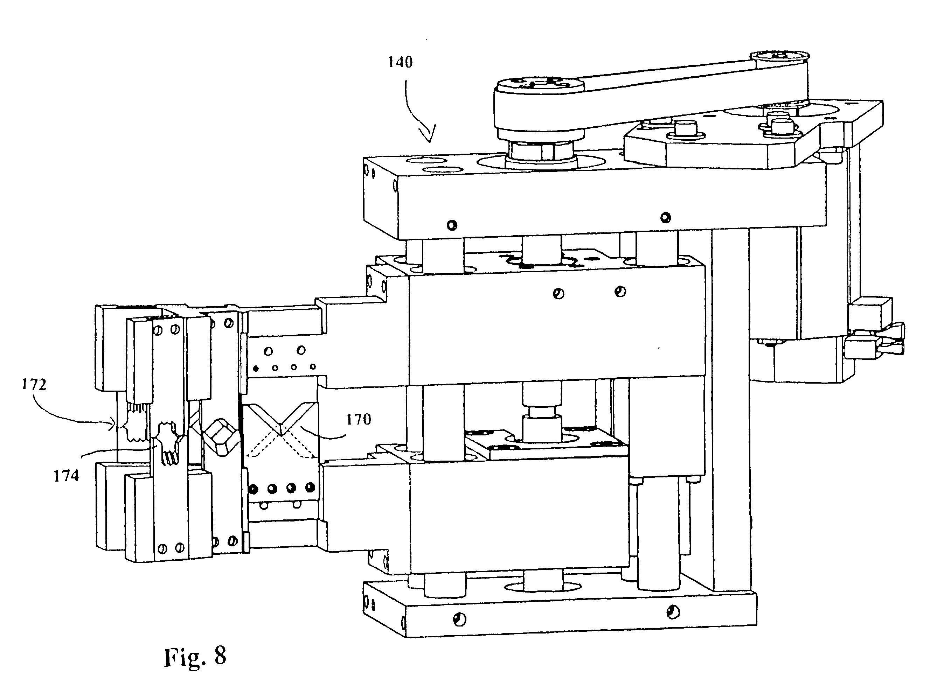

- Fig. 8: eine perspektivische Darstellung des Bearbeitungsmittelteils zusammen mit den dazugehörigen Versorgungseinrichtungen;

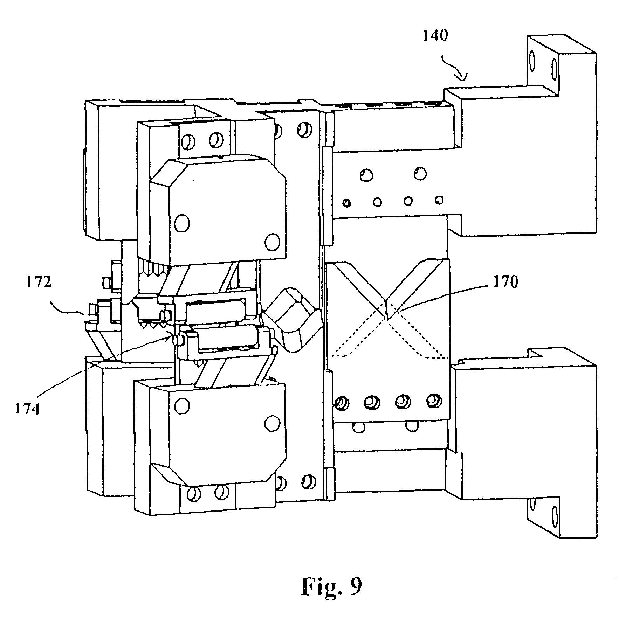

- Fig. 9: eine perspektivische Darstellung des Bearbeitungsmittelteils nach Figur 8 ohne die Versorgungseinrichtungen.

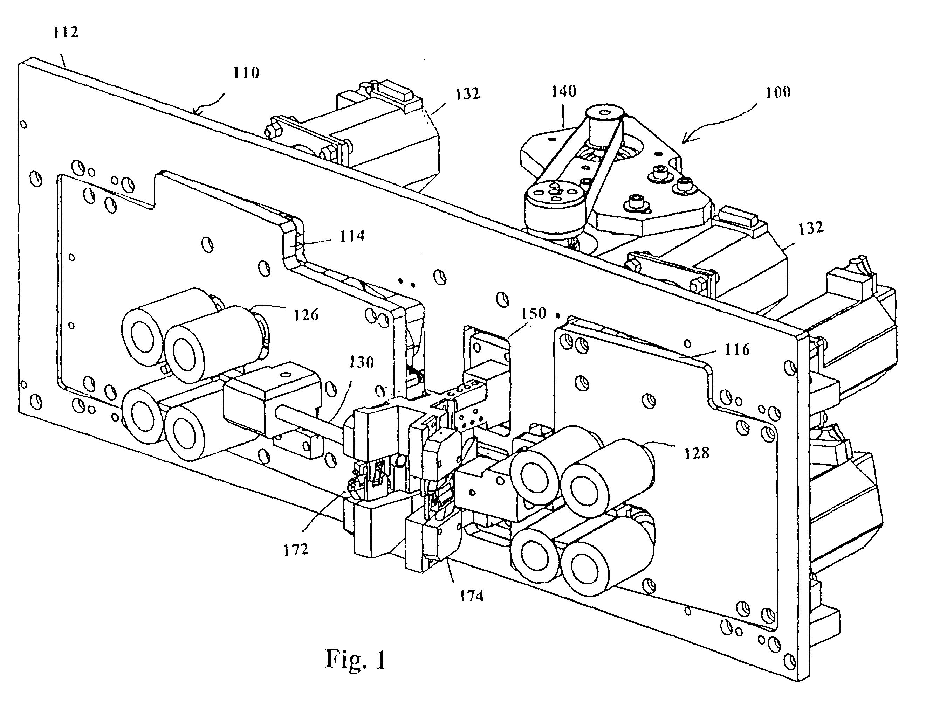

Die wesentlichen Elemente der in Figur 1 als Ganzes mit 100 bezeichneten Vorrichtung sind an der Platte 110 angeordnet, die im Ausführungsbeispiel aus einer Grundplatte 112 und zwei schwenkbaren Plattenteilen 114 und 116 besteht. Die beiden schwenkbaren Plattenteile 114 und 116 sind um die Schwenkpunkte 118 bzw. 120 um einen Schwenkwinkel schwenkbar gelagert; die Schwenkpunkte 118 und 120 sind die Lagermittelpunkte jeweils eines Schwenklagers 122 bzw. 124, das jeweils an der Grundplatte 110 angebracht ist. Die Schwenkachsen sind im vorliegenden Ausführungsbeispiel hinter der Platte 110 vorgesehen, sie können aber auch - alternativ - in der Plattenebene vorgesehen sein.

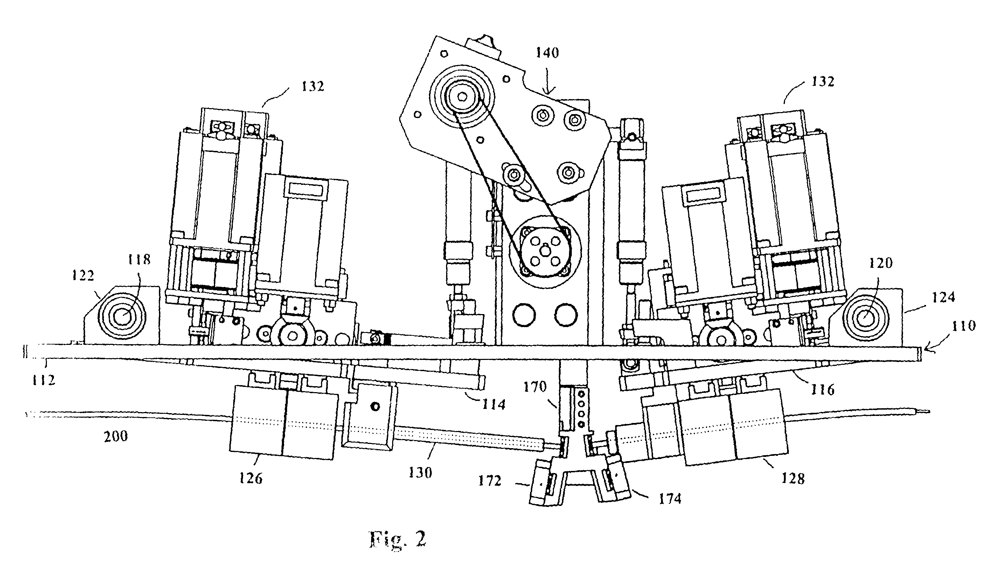

Auf dem ersten schwenkbaren Plattenteil 114 ist eine erste Kabeltransport- oder Kabelfördereinrichtung 126 zum Bewegen des Leiters 200 - in Figur 2 eingezeichnet - wahlweise in zwei Richtungen - vorwärts und zurück - vorderseitig - also kabelseitig - montiert, wobei die Antriebselemente 132 an der Hinterwand der Schwenkplatte 114 angebracht sind. Im Ausführungsbeispiel ist die Kabeltransport- oder Kabelfördereinrichtung 126 als eine Vielzahl von Förderrollen ausgebildet, es können aber alternativ auch alle anderen Antriebselemente für den Leiter bzw. das Kabel zum Einsatz kommen. Als Antriebselemente für den Kabeltransport sind im vorliegenden Ausführungsbeispiel Elektromotoren vorgesehen, aber auch hierfür können andere Antriebselemente gemäss dem Stand der Technik eingesetzt werden.

Im Ausführungsbeispiel ist auf dem schwenkbaren Plattenteil 114 zusätzlich eine nach oben schwenkbare Führungshülse 130 angeordnet, in der das zugeführte Kabel bis zur Bearbeitungseinheit 140 geführt wird. Nach dem - weiter unten beschriebenen - Durchtrennen des Kabels und vor der Zurückführung des abgetrennten Kabelteils kann die Führungshülse 130 durch einen Elektromagnet nach oben geschwenkt werden und gibt dem hinteren Ende des abgetrennten Kabelteils Platz für die weitere Bearbeitung, z.B. dem Abisolieren der äusseren Kabelummantelung. Diese Ausführung ist dann sinnvoll, wenn mit dem gleichen Messer das Kabel durchgetrennt und abisoliert werden soll.

Auf einem zweiten schwenkbaren Plattenteil 116 ist eine zweite Kabeltransporteinrichtung 128 angebracht, wobei diese wiederum durch eine Vielzahl von Förderrollen ausgebildet ist, aber alternativ auch alle anderen Antriebselemente für den Leiter bzw. das Kabel zum Einsatz kommen können. Als Antriebselemente sind im vorliegenden Ausführungsbeispiel wiederum Elektromotoren vorgesehen, aber auch hierfür können andere Antriebselemente gemäss dem Stand der Technik eingesetzt werden. Die Schwenkachse des zweiten Plattenteils 116 ist parallel zur Schwenkachse des ersten schwenkbaren Plattenteils 114 - hinter der Platte 110 - vorgesehen. Für diesen Aspekt der Erfindung ist es wesentlich, dass die Schwenkrichtung für beide schwenkbaren Plattenteile 114 und 116 nach vorne vorgesehen ist, da damit - im hier beschriebenen Ausführungsbeispiel - die Zugänglichkeit zu den kabelführenden und -bearbeitenden Teilen nicht wie in der EP-A-1 174 970 beeinträchtigt wird.

Im Ausführungsbeispiel mit einem Schwenken der Plattenteile 114 und 116 aus einer Grundstellung, bei der diese Plattenteile 114 und 116 im wesentlichen mit einer Grundplatte 112 - oder alternativ, wenn auf diese Grundplatte 112 verzichtet wird und die beiden schwenkbaren Plattenteile 114 und 116 alleine die Platte 110 bilden, miteinander - eine Ebene bilden, jeweils in eine ausgeschwenkte Stellung, wird ein pneumatischer Schwenkantrieb verwendet. In einem erweiterten Ausführungsbeispiel, bei dem die Plattenteile 114 und 116 aus der Grundstellung jeweils in z.B. zwei unterschiedliche Stellungen geschwenkt werden sollen, wird ein elektrischer Schwenkantrieb mit einem Motor, z.B. einem Schrittmotor verwendet. Alternativ dazu kann aber auch ein pneumatischer Antrieb mit zwei Zylindern verwendet werden.

In einer Aussparung 150 der Platte 110 ist ein Bearbeitungsmodul 140 mit den Bearbeitungseinheiten eingelassen. Dabei ist in erster Linie die als Durchtrennungs- wie auch als Abisolierungseinrichtung für die äussere Ummantelung ausgebildete Schneidevorrichtung 170 zu nennen, die in ihrem Arbeitspunkt auf der Linie der Kabelführung im nicht ausgeschwenkten Zustand der genannten Schwenkteile 114, 116 und 130 liegt. Vor der Durchtrennungs- wie auch als Abisolierungseinrichtung 170 (von dem vor der Vorrichtung stehenden Betrachter aus gesehen) ist auf diesem Modul 140 die erste Aderabisoliereinrichtung 172 für die einzelnen Adern des Kabels vorgesehen. Dabei ist im Ausführungsbeispiel die Anordnung so ausgebildet, dass diese Schneidwerkzeuge jeweils aus drei nebeneinander angeordneten Einzelwerkzeugen für die gleichzeitige Bearbeitung von bis zu drei Adern vorgesehen sind.

Die erste Aderabisoliereinrichtung 172 ist so ausgerichtet, dass das vordere Kabelende auf diese Einrichtung gerichtet ist, wenn der erste schwenkbare Plattenteil 114 sich im ausgeschwenkten Zustand befindet. Das Zuführen dieses Kabelendes von der Durchtrennungs- wie auch als Abisolierungseinrichtung 170 für die äussere Ummantelung zur Aderabisoliereinrichtung 172 wird also durch das Ausschwenken des ersten schwenkbaren Plattenteils 114 durchgeführt. Dabei kann auf früher übliche Greifer etc. verzichtet werden. Die erste Aderabisoliereinrichtung 172 ist im Ausführungsbeispiel auswechselbar ausgeführt, so dass an ihre Stelle auch eine andere Bearbeitungseinrichtung für das vordere Kabelende eingesetzt werden kann.

Ebenfalls vor der Durchtrennungs- und Abisolierungseinrichtung 170 (von dem vor der Vorrichtung stehenden Betrachter aus gesehen) ist auf dem Modul 140 auch die zweite Aderabisoliereinrichtung 174 für die einzelnen Adern des Kabels vorgesehen. Auch diese ist so ausgebildet, dass die Schneidwerkzeuge jeweils aus drei nebeneinander angeordneten Einzelwerkzeugen für die gleichzeitige Bearbeitung von bis zu drei Adern bestehen.

Die zweite Aderabisoliereinrichtung 174 ist so ausgerichtet, dass das hintere Kabelende auf diese Einrichtung gerichtet ist, wenn der zweite schwenkbare Plattenteil 116 sich im ausgeschwenkten Zustand befindet. Das Zuführen dieses Kabelendes von der Durchtrennungs- und Abisolierungseinrichtung 170 für die äussere Ummantelung zur Aderabisoliereinrichtung 174 wird also durch das Ausschwenken des zweiten schwenkbaren Plattenteils 116 ohne jegliche Greifer durchgeführt.

Das Modul 140 ist im Ausführungsbeispiel so eingerichtet, dass vor den beiden beschriebenen Bearbeitungseinrichtungen 172 und 174 (von dem vor der Vorrichtung stehenden Betrachter aus gesehen) noch weitere Einrichtungen zum Aufbringen von Crimpteilen und/oder zum Verdrillen der Aderenden aufsteckbar sind. In diesem Fall werden die beiden schwenkbaren Plattenteile 114 und 116 jeweils in eine zweite Schwenkposition herausgeschwenkt, so dass das vordere Kabelende bzw. das hintere Kabelende auf diese weiteren Bearbeitungseinrichtungen gerichtet sind und von diesen bearbeitet werden können.

## Patentansprüche

1. Vorrichtung (100) zum Bearbeiten von kabelförmigen Leitern (200), insbesondere von mehradrigen Kabeln, mit
- zumindest einem Transportmittel (126) mit einem Antriebsmittel (128) zur Transportzuführung und/oder zum Längstransport von kabelförmigem Leitermaterial,
- einem Trennmittel (170) zum Durchtrennen des kabelförmigem Leitermaterials,
- zumindest einem ersten Mittel (170) zum Bearbeiten des durchtrennten, kabelförmigem Leitermaterials,
- zumindest einem Führungsmittel (130) zur Längsführung des kabelförmigen Leitermaterials,
- einer im wesentlichen senkrecht zur Kabelrichtung ausgebildeten Platte (110), auf der zumindest einzelne der Mittel (126, 128, 130) der Vorrichtung auf einer Seite angeordnet sind,
wobei
- die genannte Platte (110) zumindest einen ersten schwenkbaren Plattenteil (114) aufweist, der um eine zur Plattenebene im wesentlichen parallelen Achse zwischen zwei Endlagen mit einem ersten Schwenkwinkel schwenkbar angeordnet ist, wobei sich auf dem Plattenteil (114) zumindest eines der genannten Transportmittel (126) sowie ein Führungsmittel (130) befinden und
- zumindest ein zweites Mittel (172) zum Bearbeiten des kabelförmigem Leitermaterials vorgesehen ist, das in einem aus der Ebene der Platte (110) herausgeschwenkten Zustand des ersten schwenkbaren Plattenteiles (114) angeordnet ist oder auswechselbar angeordnet werden kann,
- die genannte Platte (110) weiterhin einen ebenfalls in einer zur Plattenebene parallelen Achse und in die Richtung des ersten schwenkbaren Plattenteils (114) schwenkbaren zweiten Plattenteil (116) aufweist, auf dem zumindest ein weiteres Transportmittel (128) angeordnet ist und zusammen mit diesem zweiten Plattenteil (116) um einen zweiten Schwenkwinkel schwenkbar ist,
- wobei die genannten Achsen in Bereichen von sich gegenüberliegenden Enden der Plattenteile (114, 116) vorgesehen sind und
- zumindest ein drittes Mittel (174) zum Bearbeiten eines freien Endes des durchtrennten Stückes des kabelförmigen Leitermaterials in einem aus der Ebene der Platte (110) herausgeschwenkten Zustand des zweiten schwenkbaren Plattenteiles (116) angeordnet ist oder auswechselbar angeordnet werden kann.

2. Vorrichtung nach Anspruch 1,
**dadurch gekennzeichnet, dass**
- der erste schwenkbare Plattenteil (114) um einem dritten Schwenkwinkel schwenkbar ist und zumindest ein viertes Mittel zum Bearbeiten eines freien Endes des kabelförmigem Leitermaterials und/oder des abgetrennten Stückes des kabelförmigem Leitermaterials in einem aus der Ebene der Platte (110) herausgeschwenkten Zustand des ersten schwenkbaren Plattenteiles (114) angeordnet ist oder auswechselbar angeordnet werden kann,
- der zweite schwenkbare Plattenteil (116) mit einem vierten Schwenkwinkel schwenkbar ist und zumindest ein fünftes Mittel zum Bearbeiten eines freien Endes des kabelförmigem Leitermaterials und/oder des abgetrennten Stückes des kabelförmigem Leitermaterials in einem aus der Ebene der Platte (110) herausgeschwenkten Zustand des zweiten schwenkbaren Plattenteiles (116) angeordnet ist oder auswechselbar angeordnet werden kann.

3. Vorrichtung nach Anspruch 1,
**dadurch gekennzeichnet, dass**
- das oder die Führungsmittel (130) so ausgebildet sind, dass das freie Ende des kabelförmigen Leitermaterials aus seiner Längsrichtung herausgeschwenkt werden kann.

4. Vorrichtung nach einem der vorstehenden Ansprüche,
**dadurch gekennzeichnet, dass**
- das Trennmittel (170) zum Durchtrennen des kabelförmigem Leitermaterials auch als das erste Mittel (170) zum Bearbeiten des durchtrennten, kabelförmigem Leitermaterials ausgebildet ist.

5. Verfahren zum Bearbeiten von kabelförmigen Leitern, insbesondere von mehradrigen Kabeln, mit
- einer Vorrichtung (100), die zumindest ein Transportmittel (126) mit einem Antriebsmittel (132) zur Transportzuführung und/oder zum Längstransport von kabelförmigem Leitermaterial,
- einem Trennmittel (170) zum Durchtrennen des kabelförmigem Leitermaterials, zumindest ein erstes Mittel (170) zum Bearbeiten des durchtrennten, kabelförmigem Leitermaterials,
- zumindest einem Führungsmittel (130) zur Längsführung des kabelförmigem Leitermaterials und
- einer im wesentlichen senkrecht zur Kabelrichtung ausgebildeten Platte (110), auf der zumindest einzelne der Mittel der Vorrichtung (126, 128, 130) auf einer Seite angeordnet sind umfasst
wobei
- mit einem ersten Bearbeitungsmittel (170) eine erste Bearbeitung des Kabels im wesentlichen auf der Linie der Kabelführung durchgeführt wird, insbesondere ein Durchtrennen des Kabels und ein Abisolieren einer äusseren Kabelummantelung,
- ein erster schwenkbaren Plattenteil (114), auf dem eines der genannten Transportmittel (126) sowie ein Führungsmittel (130) befindet, um eine zur Plattenebene (110) im wesentlichen parallelen Achse mit einem ersten Schwenkwinkel geschwenkt wird,
- mit einem zweiten Bearbeitungsmittel (172) zum Bearbeiten des kabelförmigem Leitermaterials, das in einem aus der Ebene der Platte (110) herausgeschwenkten Zustand eines ersten schwenkbaren Plattenteiles (114) angeordnet ist oder auswechselbar angeordnet werden kann, eine zweite Bearbeitung des Kabels im herausgeschwenkten Zustand durchgeführt wird und
- mit einem dritten Bearbeitungsmittel (174) zum Bearbeiten des kabelförmigem Leitermaterials, das in einem aus der Ebene der Platte (110) herausgeschwenkten Zustand eines zweiten schwenkbaren Plattenteiles (116) angeordnet ist oder auswechselbar angeordnet werden kann, eine dritte Bearbeitung eines freien Endes des durchtrennten Stückes des kabelförmigem Leitermaterials im herausgeschwenkten Zustand durchgeführt wird.

6. Verfahren nach Anspruch 5,
**dadurch gekennzeichnet, dass**
- mit einem vierten Bearbeitungsmittel zum Bearbeiten des kabelförmigem Leitermaterials, das in einem weiteren aus der Ebene der Platte (110) herausgeschwenkten Zustand des ersten schwenkbaren Plattenteiles (114) angeordnet ist oder auswechselbar angeordnet werden kann, eine vierte Bearbeitung des Kabels im herausgeschwenkten Zustand durchgeführt wird,
- mit einem fünften Bearbeitungsmittel zum Bearbeiten des kabelförmigem Leitermaterials, das in einem weiteren aus der Ebene der Platte (110) herausgeschwenkten Zustand des zweiten schwenkbaren Plattenteiles (116) angeordnet ist oder auswechselbar angeordnet werden kann, eine fünfte Bearbeitung des Kabels im herausgeschwenkten Zustand durchgeführt wird.

## Claims

1. A device (100) for processing cable-shaped conductors (200), particularly multicore cables, having
- at least one transport means (126) having a drive means (128) for transport supply and/or for lengthwise transport of cable-shaped conductor material,
- a cutting means (170) for cutting through cable-shaped conductor material,
- at least one first means (170) for processing the cut, cable-shaped conductor material,
- at least one guide means (130) for lengthwise guiding of the cable-shaped conductor material,
- at least one plate (110), implemented essentially perpendicularly to the cable direction, on which at least some of the means (126, 128, 130) of the device are positioned on one side,
wherein
- the plate (110) cited has at least one first pivotable plate part (114), which is pivotably positioned around an axis essentially parallel to the plate plane between two end positions using a first pivot angle, at least one of the transport means (126) cited and a guide means (130) being located on the plate part (114), and
- at least one second means (172) is provided for processing the cable-shaped conductor material, which is arranged in a state of the first pivotable plate part (114) pivoted out of the plane of the plate (110) or may be arranged replaceably,
- furthermore, the plate (110) cited has a second plate part (116), also pivotable in an axis parallel to the plate plane and in the direction of the first pivotable plate part (114), on which at least one further transport means (128) is arranged and is pivotable together with this second plate part (116) around a second pivot angle,
- the axes cited being provided in the regions of diametrically opposite ends of the plate parts (114, 116) and
- at least one third means (174) for processing a free end of the cut piece of the cable-shaped conductor material is arranged in a state of the second pivotable plate part (116) pivoted out of the plane of the plate (110) or may be arranged replaceably.

2. The device according to Claim 1,
**characterized in that**
- the first pivotable plate part (114) is pivotable around a third pivot angle and at least one fourth means for processing a free end of the cable-shaped conductor material and/or the cutoff piece of the cable-shaped conductor material is arranged in a state of the first pivotable plate part (114) pivoted out of the plane of the plate (110) or may be arranged replaceably,
- the second pivotable plate part (116) is pivotable using a fourth pivot angle and at least one fifth means for processing a free end of the cable-shaped conductor material and/or the cutoff piece of the cable-shaped conductor material is arranged in a state of the second pivotable plate part (116) pivoted out of the plane of the plate (110) or may be arranged replaceably.

3. The device according to Claim 1,
**characterized in that**
- the guide means (130) are implemented so that the free end of the cable-shaped conductor material may be pivoted out of its lengthwise direction.

4. The device according to one of the preceding claims,
**characterized in that**
- the cutting means (170) for cutting through the cable-shaped conductor material is also implemented as the first means (170) for processing the cut-through, cable-shaped conductor material.

5. A method of processing cable-shaped conductors, particularly multicore cables, using
- a device (100), which has at least one transport means (126) having a drive means (132) for transport supply and/or for lengthwise transport of cable-shaped conductor material,
- a cutting means (170) for cutting through cable-shaped conductor material, at least one first means (170) for processing the cut, cable-shaped conductor material,
- at least one guide means (130) for lengthwise guiding of the cable-shaped conductor material, and
- at least one plate (110), implemented essentially perpendicularly to the cable direction, on which at least some of the means of the device (126, 128, 130) are included, positioned on one side,
wherein
- using a first processing means (170), a first processing of the cable is performed essentially on the line of the cable guide, particularly cutting through the cable and stripping an outer cable sheathing,
- a first pivotable plate part (114), on which one of the transport means (126) cited as well as a guide means (130) are located, is pivoted around an axis essentially parallel to the plate plane (110), using a first pivot angle, and
- using a second processing means (172) for processing the cable-shaped conductor material, which is arranged in a state of the first pivotable plate part (114) pivoted out of the plane of the plate (110) or may be arranged replaceably, a second processing of the cable is performed in the pivoted-out state, and
- using a third processing means (174) for processing the cable-shaped conductor material, which is arranged in a state of the second pivotable plate part (116) pivoted out of the plane of the plate (110) or may be arranged replaceably, a third processing of a free end of the cut piece of the cable-shaped conductor material is performed in the pivoted-out state.

6. The method according to Claim 5,
**characterized in that**
- using a fourth processing means for processing the cable-shaped conductor material, which is arranged in a state of the first pivotable plate part (114) pivoted out of the plane of the plate (110) or may be arranged replaceably, a fourth processing of the cable is performed in the pivoted-out state,
- using a fifth processing means for processing the cable-shaped conductor material, which is arranged in a state of the second pivotable plate part (116) pivoted out of the plane of the plate (110) or may be arranged replaceably, a fifth processing of the cable is performed in the pivoted-out state.

## Revendications

1. Dispositif (100) pour l'usinage de conducteurs (2) en forme de câble, en particulier de câbles multibrins, avec
- au moins un moyen de transport (126) avec un moyen de transport (128) pour l'arrivée de transport et/ou pour le transport longitudinal de matériau conducteur en forme de câble,
- un moyen de séparation (170) pour la séparation du matériau conducteur en forme de câble,
- au moins un premier moyen (170) pour l'usinage du matériau conducteur séparé et en forme de câble,
- au moins un moyen de guidage (130) pour le guidage longitudinal du matériau conducteur en forme de câble,
- une plaque (110) conçue sensiblement perpendiculairement à la direction du câble, sur laquelle au moins certains des moyens (126, 128, 130) du dispositif sont disposés sur un côté,
- la plaque (110) citée présentant au moins une première partie de plaque (114) basculante, qui est disposée de façon à pouvoir basculer autour d'un axe sensiblement parallèle au plan de plaque entre deux positions extrêmes avec un premier angle de pivotement, au moins l'un des moyens de transport (126) cités et un moyen de guidage (130) se trouvant sur la partie de plaque (114), et
- au moins un second moyen (172) étant prévu pour l'usinage du matériau conducteur en forme de câble, lequel est disposé dans un état, basculé vers l'extérieur à partir du plan de la plaque (110), de la première partie de plaque (114) basculante ou peut être disposé de façon interchangeable,
- la plaque (110) citée présentant également une seconde partie de plaque (116) pouvant basculer également dans un axe parallèle au plan de plaque et dans le sens de la première partie de plaque (114) basculante, sur laquelle au moins un autre moyen de transport (128) est disposé et peut pivoter conjointement avec cette seconde partie de plaque (116) d'un second angle de pivotement,
- les axes cités étant prévus dans des zones d'extrémités se faisant face des parties de plaques (114, 116), et
- au moins un troisième moyen (174) pour l'usinage d'une extrémité libre de la pièce séparée du matériau conducteur en forme de câble est disposé dans un état, pouvant être basculé vers l'extérieur à partir du plan de la plaque (110), de la seconde partie de plaque (116) basculante ou être disposé de façon amovible.

2. Dispositif selon la revendication 1,
**caractérisé en ce que**
- la première partie de plaque (114) basculante peut basculer d'un troisième angle de pivotement et au moins un quatrième moyen pour l'usinage d'une extrémité libre du matériau conducteur en forme de câble et/ou de la pièce séparée du matériau conducteur en forme de câble est disposé dans un état, pouvant basculer vers l'extérieur à partir du plan de la plaque (110), de la première partie de plaque (114) basculante ou être disposé de façon amovible,
- la seconde partie de plaque (116) basculante peut basculer avec un quatrième angle de pivotement et au moins un cinquième moyen pour l'usinage d'une extrémité libre du matériau conducteur en forme de câble et/ou de la pièce séparée du matériau conducteur en forme de câble est disposé dans un état, basculé vers l'extérieur à partir du plan de la plaque (110), de la seconde partie de plaque (116) basculante ou être disposé de façon amovible.

3. Dispositif selon la revendication 1,
**caractérisé en ce que**
- le ou les moyens de guidage (130) sont conçus de telle sorte que l'extrémité libre du matériau conducteur en forme de câble peut être basculée vers l'extérieur à partir de son orientation longitudinale.

4. Dispositif selon l'une quelconque des revendications précédentes,
**caractérisé en ce que**
- le moyen de séparation (170) pour la séparation du matériau conducteur en forme de câble est conçu également comme le premier moyen (170) pour l'usinage du matériau conducteur séparé en forme de câble.

5. Procédé pour l'usinage de conducteurs en forme de câble, en particulier de câbles multibrins, avec
- un dispositif (100) qui comprend au moins un moyen de transport (126) avec un moyen d'entraînement (132) pour l'arrivée de transport et/ou pour le transport longitudinal de matériau conducteur en forme de câble,
- un moyen de séparation (170) pour la séparation du matériau conducteur en forme de câble, au moins un premier moyen (170) pour l'usinage du matériau conducteur séparé et en forme de câble,
- au moins un moyen de guidage (130) pour le guidage longitudinal du matériau conducteur en forme de câble, et
- une plaque (110) réalisée sensiblement perpendiculairement à la direction du câble, sur laquelle au moins certains des moyens du dispositif (126, 128, 130) sont disposés sur un côté,
- un premier usinage du câble étant effectué avec un premier moyen d'usinage (170) sensiblement sur la ligne du guidage de câble, en particulier un sectionnement du câble et un dénudage d'une enveloppe de câble extérieure,
- une première partie de plaque (114) basculante, sur laquelle se trouvent l'un des moyens de transport (126) cités et un moyen de guidage (130), étant basculée avec un premier angle de pivotement autour d'un axe sensiblement parallèle au plan de plaque (110),
- un second usinage du câble étant effectué dans l'état basculé vers l'extérieur avec un second moyen d'usinage (172) pour l'usinage du matériau conducteur en forme de câble, qui est disposé dans un état, basculé vers l'extérieur à partir du plan de la plaque (110), d'une première partie de plaque (114) basculante ou peut être disposé de façon amovible, et
- un troisième usinage d'une extrémité libre de la pièce séparée du matériau conducteur en forme de câble étant effectué dans l'état basculé vers l'extérieur avec un troisième moyen d'usinage (174) pour l'usinage du matériau conducteur en forme de câble, qui est disposé dans un état, basculé vers l'extérieur à partir du plan de la plaque (110), d'une seconde partie de plaque (116) basculante ou peut être disposé de façon amovible.

6. Procédé selon la revendication 5,
**caractérisé en ce que**
- avec un quatrième moyen d'usinage pour l'usinage du matériau conducteur en forme de câble, qui est disposé dans un autre état, basculé vers l'extérieur à partir du plan de la plaque (110), de la première partie de plaque (114) basculante ou peut être disposé de façon amovible, un quatrième usinage du câble est effectué dans l'état basculé vers l'extérieur,
- avec un cinquième moyen d'usinage pour l'usinage du matériau conducteur en forme de câble, qui est disposé dans un autre état, basculé vers l'extérieur à partir du plan de la plaque (110), de la seconde partie de plaque (116) basculante ou peut être disposé de façon interchangeable, un cinquième usinage du câble est effectué dans l'état basculé vers l'extérieur.
